# EUROPÄISCHE PATENTSCHRIFT

(11) **EP 2 924 390 B1**
(45) Veröffentlichungstag und Bekanntmachung des Hinweises auf die Patenterteilung: **10.05.2017**
(21) Anmeldenummer: 15158331.7
(22) Anmeldetag: 10.03.2015
(51) Int. Cl.: G01B 21/16, B66F 9/075

(54) **Ausrichtbares Abstandsmessgerät**
Targetable distance measurement device
Télémètre orientable

(30) Priorität: 24.03.2014 DE 102014004140
(43) Veröffentlichungstag der Anmeldung: 30.09.2015
(73) Patentinhaber: STILL GmbH, 22113 Hamburg (DE)
(72) Erfinder: Hunt, Nicholas, 22529 Hamburg (DE); Hinkelthein, Felix, 25462 Rellingen (DE)
(74) Vertreter: Patentship Patentanwaltsgesellschaft mbH

(56) Entgegenhaltungen:
- WO-A1-2009/130528
- CH-A5- 640 050
- DE-A1- 19 545 589
- DE-A1-102006 012 205
- DE-U1-202012 004 038
- US-A- 5 337 149

## Beschreibung

Die Erfindung betrifft ein Abstandsmessgerät zur Höhenmessung eines Lastaufnahmemittels eines Fahrzeugs, insbesondere eines Flurförderzeugs, und ein Fahrzeug mit einem entsprechenden Abstandsmessgerät.

Flurförderzeuge, beispielsweise Gabelstapler oder Lagertechnikgeräte, umfassen ein an einem Hubgerüst anhebbar und absenkbar angeordnetes Lastaufnahmemittel, beispielsweise eine Lastgabel mit zwei Gabelzinken, mit der Lasten gehoben und transportiert werden können. Dabei kann es aus Gründen der Sicherheit gewünscht werden, bei gehobenen Lasten die maximale Fahrgeschwindigkeit zu begrenzen, da beispielsweise bei Kurvenfahrten mit hoch angehobenen Lasten, diese Lasten aufgrund der Fliehkraft von dem Lastaufnahmemittel fallen könnten oder das Flurförderzeug zum Kippen bringen könnten. Diese Gefahren nehmen bei größerer aufgenommener Last und größerer Hubhöhe zu. Um dieser Gefahr zu begegnen sind Sicherheitssysteme bekannt, die bei einer Kombination von großer angehobener Last und großer Hubhöhe der Last die Fahrgeschwindigkeit des Flurförderzeugs begrenzen und/oder zumindest eine entsprechende Warnung ausgeben. Bei dem Einsatz in einer Regalanlage ist es bei größeren Hubhöhen für den Fahrer zudem hilfreich, während des Positioniervorgangs die jeweils aktuelle Hubhöhe des Lastaufnahmemittels mit einer Anzeige eines Messsystems ablesen zu können.

Aus diesen Gründen besteht Bedarf an einem Höhenmesssystem, welches die Hubhöhe des Lastaufnahmemittels des Flurförderzeugs bestimmt. Entsprechend ist aus DE 197 31 687 A1 bereits ein Hubhöhenmesssystem bekannt, bei denen ein Sensor mittels eines Reibrades mit einem bewegbaren Teil des Hubmastes zusammenwirkt. Zudem sind bereits berührungslos arbeitende Hubhöhenmesssysteme bekannt, die auf der Grundlage von optischen Messverfahren, beispielsweise Laserstrahlen oder auf der Grundlage von akustischen Messprinzipien, wie Ultraschall arbeiten. Flurförderzeuge mit derartigen Hubhöhenmesssystemen sind beispielsweise aus der DE 10 2006 037 928 A1 und der DE 10 2008 020 170 A1 bekannt.

Flurförderzeuge werden häufig in staubigen und schmutzigen Umgebungen eingesetzt, wie in Gießereien, der Zementindustrie, der Düngemittelindustrie und Hafenanlagen. Gerade bei dem Transport von groben und nicht-palettierten Lasten können Teile der Last von dem Lastaufnahmemittel fallen. Zudem kann es im Betrieb des Flurförderzeugs unter engen Umgebungsbedingungen zu einem Kontakt bzw. einer Kollision des Flurförderzeugs mit der Umgebung kommen. Aus diesen Gründen ist es notwendig, das Hubhöhenmesssystem robust und solide auszuführen sowie geschützt gegen äußere mechanische Einflüsse, wie Stöße, zu bauen und am Flurförderzeug zu positionieren, um Beschädigungen des Hubhöhenesssystems bei Kontakt und Kollisionen des Flurförderzeugs mit der Umgebung zu vermeiden.

Bei der Verwendung von optischen Messsystemen als Hubhöhenmesssystem können diese durch Staub oder andere Verschmutzungen verdrecken und hierdurch ausfallen. Hieraus ergibt sich die Anforderung, dass das Messsystem vor schädlichen Einflüssen wie Verschmutzungen oder darauf fallenden Teilen geschützt wird und/oder einfach gereinigt werden kann.

Bei berührungslos arbeitenden Messsystemen ist zudem eine genaue und feine Ausrichtung der Messrichtung notwendig, insbesondere wenn das Messsystem eine Sensoreinheit umfasst, die einen Messstrahl, beispielsweise einen optischen Messstrahl, aufweist, der auf ein definiertes Ziel ausgerichtet werden muss.

Die DE 195 455 89 A1 und die US 5,337,149 offenbaren ein in zwei Achsen rechtwinklig aufgehängtes Lasermesssystem

Aus der WO 2009/130528 A1 ist ein Hubfahrzeug mit einer optischen, auf eine Last gerichteten Distanzmessvorrichtung bekannt.

Die DE 20 2012 004038 U1 offenbart einen Hochubgabelhubwagen, mit einem optischen Sensor, der eine Last überwacht und auf einer drehbaren Welle gelagert ist, um den gesamten Bereich überstreichen zu können.

Die DE 10 2006 012205 A1 offenbart eine Hubhöhen- und/oder Neigungsmessung durch eine Entfernungsmessung vom Lastaufnahmemittel zum Boden auf mindestens drei Punkte sowie Triangulation.

Aus der CH 640 050 A5 sind ein Theodolit und ein optischer Distanzmesser mit einer um zwei Achsen schwenkbaren Montage bekannt.

Der vorliegenden Erfindung liegt die Aufgabe zugrunde, bestehende Hubhöhenmesssysteme gemäß den beschriebenen Anforderungen zu verbessern.

Diese Aufgabe wird erfindungsgemäß durch ein Abstandsmessgerät gemäß Anspruch 1 gelöst. Das Abstandsmessgerät ist eingerichtet zur Messung der Hubhöhe eines Lastaufnahmemittels eines Flurförderfahrzeugs und umfasst einen Außenträger, einen Innenträger und eine Sensoreinheit. Dabei ist der Innenträger an dem Außenträger um eine erste Schwenkachse schwenkbar gelagert. Weiterhin ist die Sensoreinheit gegenüber dem Innenträger schwenkbar um eine zweite Schwenkachse gelagert. Das Abstandsmessgerät weist zur Ausrichtung der Sensoreinheit um die erste Schwenkachse eine erste Justagevorrichtung und zur Ausrichtung der Sensoreinheit um die zweite Schwenkachse eine zweite Justagevorrichtung auf. Dabei umfasst die erste Justagevorrichtung und die zweite Justagevorrichtung jeweils eine Einstellschraube. Erfindungsgemäß kann somit die Sensoreinheit um zwei Schwenkachsen und somit um zwei rotatorische Freiheitsgrade eingestellt und dadurch die Messrichtung der Sensoreinheit in zwei Richtungen eingestellt werden, wodurch es ermöglicht wird, den Messstrahl exakt auf einen Reflexionspunkt oder einen Messreflektor auszurichten. Es kann auf einfache Weise der Innenträger um die erste Schwenkachse relativ zum Außenträger verstellt und eingestellt werden. Weiter kann auf einfache Weise die Sensoreinrichtung um die zweite Schwenkachse relativ zum Innenträger verstellt und eingestellt werden. Mit den beiden Einstellschrauben ergibt sich somit ein stellschraubengeführter Doppelschwenkmechanismus, wobei mit den beiden Einstellschrauben eine stufenlose und fein dosierbare Einstellung der Sensoreinheit um jede der beiden Schwenkachsen über entsprechende Gewinde der Einstellschrauben erzielbar ist.

Vorteilhafterweise ist somit für jede Schwenkachse eine Justagevorrichtung vorgesehen, so dass die Einstellung und Ausrichtung der Sensoreinheit um die beiden Schwenkachsen unabhängig voneinander eingestellt werden kann. Mit den beiden Justagevorrichtungen kann sowohl in der Produktion des Flurförderzeugs, wie auch bei dem industriellen Einsatz die Sensoreinheit exakt und fein dosierbar ausgerichtet werden, falls eine Fehlausrichtung wie bspw. durch Verzug einzelner Bauteile des Hubgerüsts vorhanden sein sollte bzw. eingetreten ist.

Gemäß einer vorteilhaften Ausgestaltungsform sind die erste Schwenkachse und die zweite Schwenkachse senkrecht zueinander angeordnet. Mit zwei senkrecht zueinander angeordneten Schwenkachsen kann auf einfache Weise eine exakte Ausrichtung der Messrichtung der Sensoreinrichtung auf einen Reflexionspunkt oder einen Messreflektor erzielt werden.

Es ist bevorzugt eine Schwenkbarkeit der Sensoreinheit relativ zu dem Außenträger um die erste und die zweite Schwenkachse von mindestens +/- 3° und bevorzugt mindestens +/-5° ermöglicht. Ferner kann die Messrichtung der Sensoreinheit jeweils zur ersten und zur zweiten Schwenkachse im Wesentlichen senkrecht ausgerichtet oder ausrichtbar sein. Aufgrund dieser Winkelbereiche der Einstellbarkeit kann auch bei Hubgerüsten, die einen gewissen Verzug aufweisen, oder bei entsprechend hohen Fertigungstoleranzen die Messrichtung in exakte Ausrichtung zu dem Messreflektor gebracht werden.

Ferner kann der Außenträger und der Innenträger jeweils gegenüberliegende Flanken umfassen und die Lagerung um die erste Schwenkachse Lager- oder Schwenkpunkte entlang den gegenüberliegenden Flanken umfassen. Die Flanken können U-förmig abgewinkelte bzw. gebogene Bereiche von jeweils dem Außenträger und dem Innenträger sein. Alternativ und/oder zusätzlich kann der Außenträger eine geschweißte, tiefgezogene, im Spritzgussverfahren hergestellte oder sonstige topfartige Form aufweisen und die Flanken des Außenträgers werden durch gegenüberliegende Wände der topfartigen Form gebildet. Wenn bevorzugt der Innenträger direkt mit einem Parallelversatz innerhalb des Außenträgers aufgenommen wird, wird hierdurch eine kompakte Bauform des Abstandsmessgeräts geschaffen. Weiterhin bildet hierbei der Außenträger eine schützende Hülle bzw. ein schützendes Gehäuse um den Rest des Abstandmessgeräts. Dies bedeutet, dass vor allem nur der Außenträger aus einem ausreichend dicken und somit festem Material gefertigt werden muss, um die einleitend genannte Gefahr von Beschädigungen von der Sensoreinheit abzuwehren.

Weiter kann bevorzugt die Sensoreinheit eingerichtet sein, ein Messsignal auszusenden und einen Messaufnehmer umfassen, um Eigenschaften von dem an einem Objekt reflektierten Messsignals aufzunehmen und ein elektronisches Ergebnissignal bereitzustellen, welches ein Maß für den Abstand des Objekts von der Sensoreinheit ist. Die genannten Eigenschaften des reflektierten Messsignals können Signallaufzeiten sein oder eine Strahlablenkung, wie dies bspw. bei dem Triangulationsmessprinzip zum Einsatz kommt. Da die Sensoreinheit also den genannten Sender und einen Empfänger aufweist, wird an dem bewegbaren oberen Teil des Hubgerüsts kein elektronisches Bauteil mehr benötigt. Auch ergibt sich eine deutliche Reduzierung der mechanischen Bauelemente in Vergleich zu vorbekannten Ausführungsformen mit einem Messseil, welches auf einer Trommel aufgerollt werden musste.

Bevorzugt kann der Außenträger ein mit Biegungen versehenes Stahlblech umfassen. Da ein Biegevorgang ein einfacher und kostengünstiger Fertigungsschritt ist, kann so auf einfache Weise und mit geringem Bauaufwand eine stabile und robuste Struktur des Außenträgers hergestellt werden, die einen hohen Schutz der Sensoreinheit vor äußeren mechanischen Einwirkungen bietet.

Weiter kann der Außenträger unabhängig von der Herstellart bevorzugt aus einem Stahlblech gefertigt werden. Das Außengehäuse weist durch die Ausbildung aus Stahlblech und entsprechender Blechdicke eine hohe Widerstandfähigkeit gegen mechanische Einwirkungen auf, so dass die Sensoreinheit auch bei starken Belastungen durch das von dem Außenträger gebildete Gehäuse gut vor äußeren Einflüssen geschützt wird.

Bevorzugt weist die Sensoreinheit einen in Messrichtung zeigenden Signaldurchtrittsbereich auf und der Signaldurchtrittsbereich ist entweder bündig zu der benachbarten Kontur des Außenträgers oder um einen Abstand in Richtung des Inneren des Abstandsmessgeräts versetzt. Der Signaldurchtrittsbereich ist bevorzugt eben. Wenn der Signaldurchtrittsbereich bündig zur Kontur des Außenträgers ist, so kann er besonders einfach gereinigt werden. Ein gewisser Versatz nach innen ist allerdings auch vorteilhaft, da so die Sensoreinheit vor schädigenden Einflüssen, wie darauf fallenden Steinen oder sonstigen Gegenständen oder Schüttgut geschützt wird. Allerdings sollte dieser Versatz auch nicht zu groß sein, da dann der Signaldurchtrittsbereich nicht mehr gut, wie z.B. mit einem Lappen, vor staubigen Verschmutzungen gereinigt werden kann.

Ferner kann bevorzugt die Sensoreinheit einen in Messrichtung zeigenden Signaldurchtrittsbereich aufweisen. Bei einer Ausrichtung des Signaldurchtrittsbereichs vertikal nach oben ist das Abstandsmessgerät an seiner Unterseite oder seinem unteren Bereich komplett geöffnet oder umfasst zumindest geöffnete Bereiche, deren Breite größer ist als insbesondere sämtliche Spalte oder Spalten zwischen dem Außenträger und Innenträger beziehungsweise dem Innenträger und der Sensoreinheit. Dies hat den Vorteil, dass Schmutz, der durch die genannten Spalten in das Innere des Abstandsmessgeräts fällt kann, nach unten weiter raus- bzw. durchfallen kann. Wenn beispielsweise Säcke mit Schüttgut transportiert werden, so können Bestandteile, wie z.B. Getreide, Steine oder Düngerkörner auf den Sensor fallen. Abhängig von der Größe können diese Teile weggewischt werden oder fallen durch das Abstandsmessgerät. Eine komplette Kapselung des Sensors könnte zwar den Einfluss von störenden Partikeln effektiv verhindern, aber hierfür wäre ein höherer konstruktiver Aufwand auch deshalb notwendig, da die Kapselung eine hohe mechanische Stabilität aufweisen muss. Auch wäre die nachfolgend beschriebene Justierung der Sensorausrichtung erschwert.

Mit besonderem Vorteil ist eine erste Fixiervorrichtung vorgesehen, mittels der der Innenträger an dem Außenträger um die erste Schwenkachse fixierbar ist. Nach der Einstellung des Innenträgers relativ zu dem Außenträger mittels der ersten Justagevorrichtung kann mit der ersten Fixiervorrichtung die gewählte Einstellung und Ausrichtung auf einfache Weise sicher und dauerhaft fixiert werden.

Vorteilhafterweise ist die erste Fixiervorrichtung von Klemmschrauben gebildet, die gleichzeitig die erste Schwenkachse bilden. Hierdurch ergibt sich eine baulich einfache Lösung, da mit den Klemmschrauben gleichzeitig die erste Schwenkachse gebildet wird. Zudem kann mittels Klemmschrauben unter Zuhilfenahme eines einfachen und handelsüblichen Werkzeugs die erste Fixiervorrichtung gelöst und arretiert werden.

Mit besonderem Vorteil ist eine zweite Fixiervorrichtung vorgesehen, mittels der die Sensoreinheit an dem Innenträger um die zweite Schwenkachse fixierbar ist. Nach der Einstellung der Sensoreinheit relativ zu dem Innenträger mittels der zweiten Justagevorrichtung kann mit der zweiten Fixiervorrichtung die gewählte Einstellung und Ausrichtung auf einfache Weise sicher und dauerhaft fixiert werden.

Vorteilhafterweise ist die zweite Fixiervorrichtung von zumindest einer Klemmschraube gebildet, wobei eine der Klemmschrauben gleichzeitig die zweite Schwenkachse bildet. Hierdurch ergibt sich eine baulich einfache Lösung, da eine von mehreren Klemmschrauben gleichzeitig die zweite Schwenkachse bildet. Zudem kann mittels Klemmschrauben unter Zuhilfenahme eines einfachen und handelsüblichen Werkzeugs die zweite Fixiervorrichtung gelöst und arretiert werden.

Mit den beiden Fixiervorrichtungen wird somit sicher verhindert, dass die eingestellten Winkelausrichtungen der Sensoreinheit durch Vibrationen, wie sie beim Betrieb des Flurförderzeugs entstehen oder durch Stöße verändert werden.

Ferner besteht bevorzugt keine Einstellmöglichkeit der Winkellage der Sensoreinheit gegenüber dem Außenträger in einer Richtung, die jeweils zu der ersten und der zweiten Schwenkachse senkrecht ist. Ebenso besteht bevorzugt keine Einstellbarkeit der absoluten (kartesischen) Lage der Sensoreinheit relativ zu dem Außengehäuse, da eine Messung im Millimeterbereich nicht notwendig ist.

Ein industrielles Fahrzeug, insbesondere ein Flurförderzeug, umfasst ein am Fahrzeug befestigtes Hubgerüst und ein erfindungsgemäßes Abstandsmessgerät. Dabei ist ein Lastaufnahmemittel mittels des Hubgerüsts heb- und senkbar und das Abstandsmessgerät ist eingerichtet, den Abstand zwischen dem Lastaufnahmemittel und einem nicht heb- oder senkbaren Teil des Hubgerüstes oder einem Fahrzeugkörper des Flurförderzeugs zu messen. Das Heben und Senken geschieht insbesondere im Wesentlichen in der vertikalen Richtung. Dabei kann ein beweglicher Referenzpunkt für die Distanzmessung, wie bspw. ein Messreflektor, am Lastaufnahmemittel oder an einem ortsfest damit verbundenen Teil des Hubgerüsts vorgesehen sein. Mit der erfindungsgemäßen Einstellbarkeit der Sensoreinheit um die beiden Schwenkachsen und dem die Sensoreinrichtung gehäuseartig umgebenden und vor äußeren mechanischen Einwirkungen schützende Außenträger kann bei einem Flurförderzeug mit geringem Bauaufwand eine stufenlose und fein justierbare Einstellung der Sensoreinheit um zwei rotatorische Freiheitsgrade erzielt werden und die innerhalb des gehäuseartigen Außenträgers angeordnete Sensoreinheit vor äußeren mechanischen Einwirkungen und möglichen Beschädigungen geschützt werden.

Weitere Vorteile und Einzelheiten der Erfindung werden anhand des in den schematischen Figuren dargestellten Ausführungsbeispiels näher erläutert. Hierbei zeigt:
- Figur 1: eine schematische Ansicht eines Flurförderzeugs in der Seitenansicht,
- Figur 2: eine Explosionsansicht eines erfindungsgemäßen Abstandsmessgeräts,
- Figuren 3 und 4: jeweils perspektivische Ansichten des erfindungsgemäßen Abstandsmessgeräts aus unterschiedlichen Blickwinkeln.

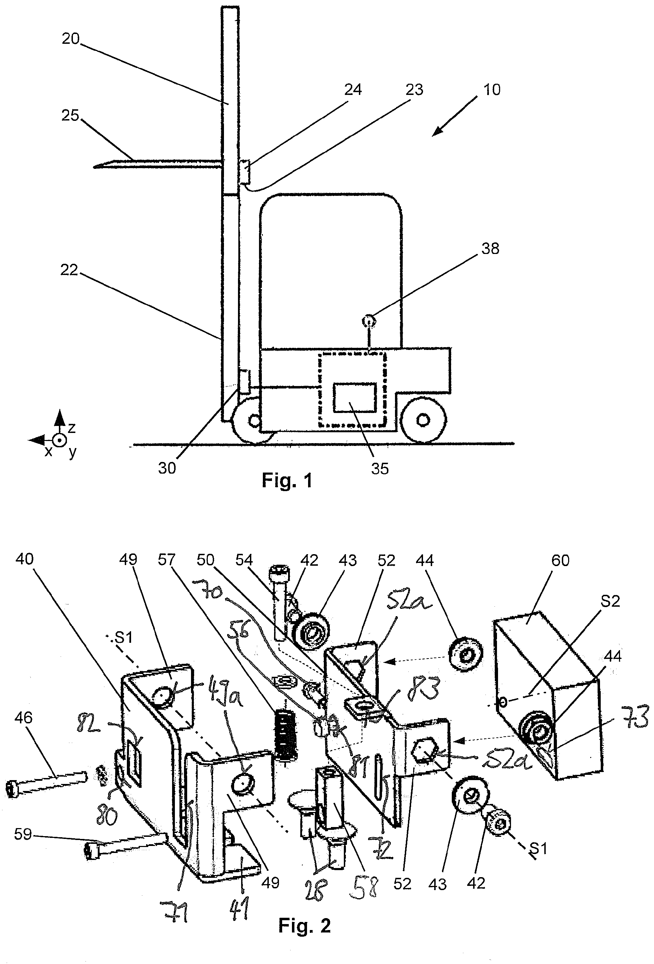

Fig. 1 zeigt ein Flurförderzeug 10 in der Seitenansicht. Dieses umfasst einen Fahrerarbeitsplatz, der beispielsweise von einem Fahrerschutzdach oder einer Fahrerkabine gebildet ist, und einen Fahrzeugkörper mit bevorzugt drei oder vier Rädern. An der Front des Fahrzeugkörpers ist ein Hubgerüst 20, 22 angeordnet. Das Hubgerüst 20, 22 kann an dem Fahrzeugkörper starr und somit nicht neigbar angeordnet sein oder alternativ in der x-z-Ebene um eine im Wesentlichen horizontale und in Fahrzeugquerrichtung verlaufende Neigeachse am Fahrzeugkörper des Flurförderzeugs 10 neigbar angeordnet sein. Das Hubgerüst 20, 22 ist in der gezeigten Ausführungsform zweigeteilt mit einem oberen verschiebbaren Teil 20, der über eine Führung (nicht dargestellt) gegen einen unteren Teil 22 vertikal verschiebbar ist. Hierfür wird ein nicht gezeigter Hubantrieb verwendet. Auch einteilige Hubgerüste oder andere mehrteilige Hubgerüste sind verwendbar, bei denen drei, vier oder mehr einzelne Teile relativ zueinander teleskopierbar sind. An dem jeweils obersten Teil des Hubgerüsts 20, 22 ist ein Lastaufnahmemittel 24 anhebbar und absenkbar angeordnet, beispielsweise ein Gabelträger mit einer von zwei Gabelzinken gebildeten Lastgabel 25.

An dem unteren Teil des Hubgerüsts 22 bzw. am Fahrzeugkörper ist ein Abstandsmessgerät 30 befestigt. Die Messrichtung des Abstandsmessgeräts 20 zeigt bei senkrecht stehendem Hubgerüst 20, 22 vertikal nach oben. Das Abstandsmessgerät 30 ist so ausgerichtet, dass dessen emittiertes Messsignal auf einen Messreflektor 23 gerichtet ist, der an dem anhebbaren und absenkbaren Lastaufnahmemittel 24 angeordnet ist. Alternativ kann der Messreflektor 23 auch an dem oberen Teil 20 des Hubgerüsts angeordnet sein. Das Messsignal wird am Messreflektor 23 reflektiert. Bei optischen Messprinzipien wird eine diffuse Reflexion bevorzugt. Es kann alternativ auch bspw. ein Spiegel für eine gerichtete Reflexion verwendet werden. In letzterem Fall ist es wichtig, dass das Abstandsmessgerät 30 exakt zu dem Spiegel ausgerichtet ist. Das reflektierte Signal wird von dem Abstandsmessgerät 30 detektiert, um hierüber die jeweilige Hubhöhe des Lastaufnahmemittels 24 zu bestimmen.

Ein von dem Abstandsmessgerät 30 erzeugtes elektronisches Signal wird an eine elektronische Steuerung 35 weitergeleitet. Der Steuerung 35 können weitere Messdaten zugeleitet werden, wie beispielsweise ein Signal, welches ein Maß für das Gewicht der mit dem Lastaufnahmemittel 24 aufgenommenen Last ist. Bei einer Überschreitung eines maximal zulässigen Gewichts bei einer entsprechenden Höhe des Hubgerüsts 20 erzeugt die Steuerung ein Warnsignal. Dieses Warnsignal kann als ein opto-/akustisches Signal an einem Signalgeber 38 ausgegeben werden oder direkt mit der Motorensteuerung des Flurförderzeugs 10 verbunden sein, um die maximal mögliche Fahrgeschwindigkeit des Flurförderzeugs 10 zu drosseln. Zusätzlich oder alternativ kann mit der Steuerung 35 eine Anzeigeeinrichtung in Wirkverbindung stehen, an der die aktuell mit dem Abstandsmessgerät 30 gemessene Hubhöhe des Lastaufnahmemittels 24 angezeigt wird, um dem Fahrer das Positionieren des Lastaufnahmemittels 24 zu erleichtern.

Im Folgenden wird der Aufbau des Abstandsmessgeräts 30 anhand der Figuren 2 bis 4 beschrieben.

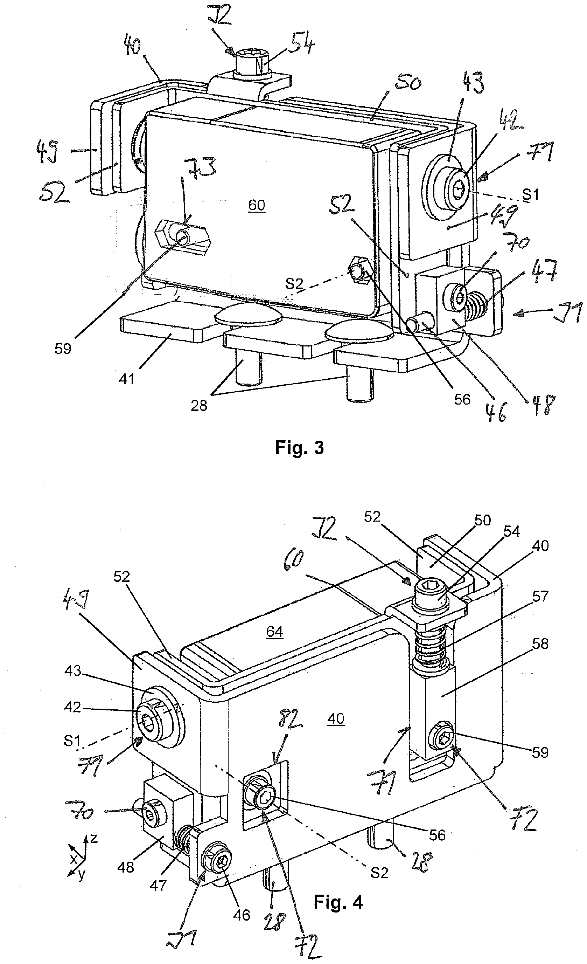

Das Abstandsmessgerät 30 umfasst gemäß Fig. 4 einen Außenträger 40, der bevorzugt aus einem Stahlblech gebildet ist. An einigen Seiten weist der Außenträger 40 Abwinklungen auf. Eine Abwinklung 41, die einbaugemäß die Unterseite des Abstandsmessgeräts 30 bildet, umfasst zwei Ausnehmungen, im dargestellten Ausführungsbeispiel zwei Schlitze, in welche Befestigungsschrauben 28 greifen, über die das Abstandsmessgerät 30 an dem unteren Teil 22 des Hubgerüsts oder am Fahrzeugkörper des Flurförderzeugs 10 befestigt werden kann.

Innerhalb des Außenträgers 40 ist ein Innenträger 50 schwenkbar um eine erste Schwenkachse S1 schwenkbar gelagert, die im dargestellten Ausführungsbeispiel in y-Richtung verläuft. Der Innenträger 50 ist ebenfalls bevorzugt aus einem Stahlblech gefertigt. Beide Elemente, nämlich der Außen- und Innenträger 40, 50 weisen an gegenüberliegenden Seiten Abwinklungen oder Flanken 49, 52 auf, die mit Bohrungen 49a bzw. Ausnehmungen 52a versehen sind, in welchen jeweils eine Klemmschraube 42 aufgenommen werden kann. Die Klemmschrauben 42 bilden mit den koaxial angeordneten Längsachsen die erste Schwenkachse S1 und bilden gleichzeitig eine erste Fixiereinrichtung F1, mittels der die Einstellung des Innenträgers 50 an dem Außenträger 40 um die erste Schwenkachse S1 fixierbar ist.

Zur Realisation einer exakten Lagerung ist in den Bohrungen 49a der Flansche 49 des Außenträgers 40 eine mit Flansch versehene Unterlegscheibe 43 angeordnet, die bevorzugt aus einem Kunststoffmaterial besteht. Zur Befestigung der Klemmschrauben 42 ist in den Ausnehmungen 52a der Abwinklungen 52 des Innenträgers 50 jeweils eine mit einem Innengewinde versehene Lagermutter 44 verdrehgesichert angeordnet und dort mit der jeweiligen Klemmschraube 42 verschraubbar. Über diese Lagerung wird die genannte Schwenkbarkeit um die erste Schwenkachse S1 erzielt. Die Einstellbarkeit um die erste Schwenkachse S1 beträgt von einer Mittelposition ausgehend zumindest +/-5° in jede Schwenkrichtung.

Zudem ist der Außenträger 40 über eine erste Justagevorrichtung J1 mit dem Innenträger 50 gekoppelt, mit der die Sensoreinheit 60 um die erste Schwenkachse S1 einstellbar ist.

Die erste Justagevorrichtung J1 umfasst eine Einstellschraube 46, die durch eine Durchgangsbohrung 80 des Außenträgers 40 geführt ist und in ein passendes Gewinde eines Lagerblocks 48 greift, der an dem Innenträger 50 befestigt ist, im dargestellten Ausführungsbeispiel an einer Abwinklung 52 des Innenträgers 50. Im dargestellten Ausführungsbeispiel ist der Lagerblock 48 mittels einer Befestigungsschraube 70 an dem Innenträger 50 befestigt. Die Längsachse der Einstellschraube 46 ist senkrecht zur Längsachse der Befestigungsschraube 70 angeordnet, im dargestellten Ausführungsbeispiel in x-Richtung. Weiterhin ist die Befestigungsschraube 70 von der Einstellschraube in z-Richtung beabstandet. So kann über die Betätigung der Einstellschraube 46 der Innenträger 50 relativ zum Außenträger 40 um die erste Schwenkachse S1 verschwenkt werden. Um bei einer lösenden Drehung der Einstellschraube 46 den Abstand beider Träger 40, 50 zu vergrößern, ist eine Federeinrichtung 47, beispielsweise eine Druckfeder, koaxial zur Schraube 46 zwischen dem Außengehäuse 40 und dem Lagerblock 48 angeordnet.

Am Innenträger 50 ist eine Sensoreinheit 60 schwenkbar um eine zweite Schwenkachse S2 gelagert. Die zweite Schwenkachse S2 ist senkrecht zur ersten Schwenkachse S1 angeordnet und verläuft im dargestellten Ausführungsbeispiel in x-Richtung. Die zweite Schwenkachse S1 ist von einer Klemmschraube 56 gebildet, die gleichzeitig eine zweite Fixiervorrichtung F2 bildet, mittels der die Sensoreinheit 60 an dem Innenträger 50 um die zweite Schwenkachse S2 fixierbar ist.

Die Klemmschraube 56 ist durch eine Durchgangsbohrung 81 des Innenträgers 50 geführt und zu der Sensoreinheit 60 geführt und mit der Sensoreinheit 60 verschraubt. Die Längsachse der Klemmschraube 56 bildet die zweite Schwenkachse S2. Gleichzeitig bildet die Klemmschraube 56 eine zweite Fixiervorrichtung F2, mittels der die Einstellung der Sensoreinheit 60 an dem Innenträger 50 um die zweite Schwenkachse S2 fixierbar ist. Um eine Zugänglichkeit der Klemmschraube 56 zu ermöglichen, weist der Außenträger 40 einen Durchbruch 82 für den Kopf der Klemmschraube 56 auf. Die Einstellbarkeit um die Schwenkachse S2 beträgt von einer Mittelposition ausgehend +/-5° in jede Schwenkrichtung.

Weiterhin ist eine zweite Justagevorrichtung J2 vorgesehen, um eine Einstellbarkeit der Sensoreinheit 60 um die zweite Schwenkachse S2 zu ermöglichen. Die zweite Justagevorrichtung J2 ist von einer Einstellschraube 54 gebildet, die im Wesentlichen in z-Richtung ausgerichtet ist und durch eine mit einer Durchgangsbohrung 83 versehene Abwinklung des Innenträgers 50 geführt ist. Die Einstellschraube 54 ist in ein entsprechendes Gewinde eines Lagerblocks 58 einschraubbar. Der Lagerblock 58 ist mittels einer weiteren Klemmschraube 59, die ebenfalls Bestandteil der zweiten Fixiervorrichtung F2 ist, mit der Sensoreinheit 60 verbunden.

Zur Aufnahme und Führung des Lagerbocks 58 ist der Außenträger 40 mit einer nutförmigen Ausnehmung 71 versehen, die in z-Richtung verläuft. In dem Innenträger 50 ist eine langlochartige Ausnehmung 72 angeordnet, die ebenfalls in z-Richtung verläuft und durch die die Klemmschraube 59 geführt ist. In der Sensoreinheit 60 ist ebenfalls eine langlochartige Ausnehmung 73 angeordnet, in der die Klemmschraube 59 geführt ist. Über eine nicht näher dargestellte Einlegemutter, die in der Ausnehmung 73 verdrehgesichert angeordnet ist, kann die Klemmschraube 59 mit der Sensoreinheit 60 verschraubt werden, um die Sensoreinheit 60 an dem Innenträger 50 zu verklemmen.

Durch ein Einschrauben der Einstellschraube 54 kann die Sensoreinheit 60 schwenkend in der y-z-Ebene um die zweite Schwenkachse S2 gehoben werden. Um ein Senken der Sensoreinheit 60 sicherzustellen, ist eine Federeinrichtung 57, beispielsweise eine Druckfeder, koaxial zu der Einstellschraube 54 angeordnet, die sich am Lagerblock 58 und der Abwinklung des Innenträgers 50 abstützt.

Nach Lösen der von den Klemmschrauben 56, 59 und 42 gebildeten beiden Fixiervorrichtungen F1, F2 für die beiden Schwenkachsen S1, S2 kann mit den beiden als Einstellschrauben 46, 54 ausgebildeten Justagevorrichtungen J1, J2 die Sensoreinheit 60 relativ zu dem Außenträger 40 um die erste und zweite Schwenkachse S1 und S2 geschwenkt und somit die Sensoreinheit 60 stufenlos sowie fein dosierbar um die beiden senkrecht zueinander stehenden Schwenkachsen S1, S2 eingestellt werden. Durch die starre Verschraubung 28 des Außenträgers 40 mit dem unteren Teil 22 des Hubgerüsts bzw. dem Fahrzeugkörper des Flurförderzeugs kann somit die Sensoreinheit 60 relativ zu dem unteren Teil 22 des Hubgerüsts bzw. zum Flurförderzeug um zwei senkrecht zueinander stehende Rotationsachsen ausgerichtet werden. Nach erfolgter Einstellung und Ausrichtung der Sensoreinheit 60 können durch Anziehen der Klemmschrauben 42, 56, 59 und somit mittels der beiden Fixiervorrichtungen F1, F2 die Einstellungen der Sensoreinheit 60 um die beiden Schwenkachsen S1, S2 dauerhaft fixiert und somit die Sensoreinheit 60 gegen weitere Verstellung gesichert werden. Die Schwenkbarkeit um die beiden Schwenkachsen S1, S2 wird benötigt, um die Messrichtung auf den Messreflektor 23 auszurichten und ist notwendig, da aufgrund der Produktionstoleranz der einzelnen Teile während des Herstellprozesses nicht sichergestellt werden kann, dass die Sensoreinheit 60 hinreichend exakt zu dem Messreflektor 23 ausgerichtet ist. Eine Einstellgenauigkeit von 0,5° ist notwendig und mit dem erfindungsgemäßen stellschraubengeführten Doppelschwenkmechanismus für die Sensoreinheit 60 auf einfache Weise erzielbar.

Durch die Ausbildung der Fixiervorrichtungen F1, F2 als Klemmschrauben 42, 56, 59 sowie der Justagevorrichtungen J1, J2 als Einstellschrauben 46, 54 wird eine einfache Handhabung unter Zuhilfenahme eines einfachen und handelsüblichen Werkzeugs, beispielsweise eines Schraubendrehers oder Schraubenschlüssels erzielt. Bevorzugt sind die Klemmschrauben 42, 56, 59 sowie die Einstellschrauben 46, 54 jeweils als Zylinderkopfschrauben mit einem Innensechskant, sogenannten Inbusschrauben, ausgebildet.

Ferner wird das Flurförderzeug 10 bestimmungsgemäß auch bei rauen Umgebungsbedingungen eingesetzt, so dass das Hubgerüst 20, 22 Stößen oder Schlägen ausgesetzt sein kann. Zudem wird das Flurförderzeug 10 bestimmungsgemäß in engen Gängen oder Fluren eingesetzt, wo es regelmäßig zu einem Anstoßen oder kleineren Anfahrunfällen mit Strukturen (z.B. Hochregallager, Wände und dergleichen) kommen kann. Bei dem Anheben von Lasten kann es zudem zu einem Verbiegen und/oder Schwingen des Hubgerüstes 20, 22 kommen. All diese Umgebungsbedingungen bewirken, dass am Hubgerüst 20, 22 während des Einsatzes ein Verzug auftreten kann. Aufgrund dieses Verzugs kann die notwendige exakte Ausrichtung von der Sensoreinheit 60 und dem Messreflektor 23 nicht mehr gegeben sein, so dass eine Korrektur der Messrichtung der Sensoreinheit 60 vorgenommen werden muss.

Aus vorstehend genannten Gründen muss die empfindliche Sensoreinheit 60 gut vor mechanischen Einwirkungen geschützt werden. Deshalb besteht der Außenträger 40 bevorzugt aus Stahlblech, um eine hohe Widerstandsfähigkeit gegen mechanische Einwirkungen von Außen zu erzielen und einen robusten Schutz der innerhalb des gehäuseartigen Außenträgers 40 angeordneten Sensoreinheit 60 zu erzielen. Der Außenträger 40 ist im horizontalen Querschnitt im Wesentlichen U-förmig. Mit der offenen Seite des U-förmigen Querschnitts liegt das Abstandsmessgerät 30 an einer Trägerstruktur des unteren Teils 22 des Hubgerüsts oder des Fahrzeugkörpers des Flurförderzeugs 10 an, so dass von dieser Seite keine störenden Einflüsse kommen können.

An der Oberseite des Abstandsmessgeräts 30 wird die Sensoreinheit 60 nicht von dem Außenträger 40 geschützt und abgedeckt, um den Signaldurchtrittsbereich 64 der Sensoreinheit 60 freizulassen. Auch wenn so die Sensoreinheit 60 durch herabfallende Steine oder sonstige Gegenstände beschädigt werden kann, ist dieser Aufbau vorteilhaft, da so die Sensoreinheit 60 leicht von Staub oder Schmutz befreit werden kann. Alternativ kann aber auch ein Teil des Außenträgers 40 oberhalb (in positive z-Richtung) der Sensoreinheit 60 angeordnet sein. Auch kann eine teilweise Überlappung in z-Richtung von dem Außenträger 40 zu der Sensoreinheit 60 gegeben sein. Dadurch dürfen die Messsignale nicht beeinflusst werden.

Die bereits beschriebenen Klemmschrauben 42 zwischen den Außen- und dem Innenträger 40,50 haben zunächst die Aufgabe der schwenkbaren Lagerung des Innenträgers 50 um die erste Schwenkachse S1. Zudem umfassen die beiden Klemmschrauben 42 eine Fixierfunktion und bilden die erste Fixiervorrichtung F1. Durch ein festes Verschrauben dieser Klemmschrauben 42 kann eine Klemmkraft zwischen dem Außenträger 40 und dem Innenträger 50 erzeugt werden, der die Sensoreinheit 60 auch bei größeren mechanischen Beanspruchungen in der gewünschten Winkellage um die erste Schwenkachse S1 hält. Dies bedeutet, dass diese Klemmschrauben 42 vor der Ausrichtungseinstellung etwas gelöst und sie danach wieder angezogen werden müssen. Ebenso umfasst die Lagerung um die zweite Schwenkachse S2 eine Fixierfunktion. Zum Lösen der Fixierung werden die die zweite Fixierfunktion F2 bildenden Klemmschrauben 56, 59 etwas gelöst und nach der Winkeleinstellung werden die Klemmschrauben 56, 59 wieder angezogen. Dabei wird die Sensoreinheit 60 in Richtung des Innenträgers 50 gezogen. Um ein direktes Anliegen beider Teile aneinander zu vermeiden, kann entsprechend an den Klemmschrauben 56, 59 eine Unterlegscheibe verwendet werden.

Es ist möglich, die Sensoreinheit 60 aufgrund der beschriebenen Justagevorrichtungen J1, J2 sehr genau und fein dosierbar einzustellen. Hierzu wird lediglich ein Schraubendreher (z.B. Sechskantschlüssel) als Werkzeug benötigt. Mit den als Einstellschrauben 46, 54 ausgebildeten Justagevorrichtungen J1, J2 ist eine sehr genaue und fein dosierbare Ausrichtung des Messstrahls erzielbar, so dass eine Richtungsgenauigkeit von bis zu 0,3° erreichbar ist. Bevorzugt kann mindestens eine Genauigkeit von mindestens 0,5° erzielt werden.

Durch die Ausführung des Außenträgers 40 mit einem im Wesentlichen U-förmigen Querschnitt, wobei innerhalb des U-förmigen Querschnitts bevorzugt der ebenfalls mit einem U-förmigen Querschnitt versehenen Innenträger 50 angeordnet ist, der an der Innenseite die Sensoreinheit 60 trägt, kann eine kompakte Bauweise erzielt werden, bei der die Sensoreinheit 60 innerhalb des Außenträgers 40 angeordnet ist, so dass das erfindungsgemäße Abstandsmessgerät 30 in räumlich beengten Einbauräumen eingesetzt werden kann.

Als Messprinzip für die Sensoreinheit 60 eignet sich die Verwendung eines Laserdistanzsensors. Hierbei wird die Phasenverschiebung von einem ausgesendeten Laserstrahl zu dem reflektierten und von der Sensoreinheit 60 detektierten Strahl analysiert und über die Laufzeit des Lichts wird die Entfernung von dem Reflektor 23 zu dem Abstandsmessgerät 30 bestimmt. Alternativ kann das bekannte Prinzip der Lasertriangulation verwendet werden. Dabei wird ein Laserstrahl auf den Messreflektor 23 gelenkt. Der zurückgeworfene Strahl fällt auf eine Zeilenkamera, die in einem gewissen Winkel zu dem Laser steht und aufgrund der von der Zeilenkamera gemessenen Lage des Reflektorpunkts kann die Höhe des Lastaufnahmemittels 24 bestimmt werden. Daneben eignen sich auch akustische Messverfahren, welche bevorzugt mit Ultraschall arbeiten.

Der Messreflektor 23 muss kein kleiner eng umgrenzter Punkt sein, sondern hierfür kann auch eine Fläche wie z.B. 5x5 cm oder 10x10cm genutzt werden. Dennoch ist eine exakte Justierung des Messstrahls auf bevorzugt die Mitte dieser Fläche notwendig, da es aufgrund dynamischer Schwingungsbelastungen und aufgrund von Gewichtsbelastungen zu elastischen Verformungen des Hubgerüsts 22 kommen kann, was auch die Lage des Messstrahls auf dem Reflektorpunkt bzw. -bereich verändert. Die relative Ortsangaben "innen" und "außen" beziehen sich stets auf den Mittelpunkt des Abstandsmessgeräts. Die Ausrichtung "oben" und "unten" bezieht sich auf die bestimmungsgemäße Ausrichtung des Abstandsmessgeräts derart, dass dabei die Messrichtung nach oben zeigt.

Die Erfindung ist nicht auf die Verwendung als Hubhöhenmesssystem beschränkt. Bei einem Flurförderzeug 10 mit einem neigbaren Hubgerüst 20, 22 kann ebenfalls das erfindungsgemäße Abstandsmessgerät als Neigungsmesssystem des Hubgerüstes 20, 22 ausgebildet werden.

## Patentansprüche

1. Abstandsmessgerät (30), eingerichtet zur Messung der Hubhöhe eines Lastaufnahmemittels (24) eines Flurförderzeugs (10), wobei das Abstandsmessgerät (30) einen Außenträger (40), einen Innenträger (50) und eine Sensoreinheit (60) umfasst, wobei der Innenträger (50) an dem Außenträger (40) um eine erste Schwenkachse (S1) schwenkbar gelagert ist und die Sensoreinheit (60) gegenüber dem Innenträger (50) schwenkbar um eine zweite Schwenkachse (S2) gelagert ist,
**dadurch gekennzeichnet,**
**dass** das Abstandsmessgerät (30) zur Ausrichtung der Sensoreinheit (60) um die erste Schwenkachse (S1) eine erste Justagevorrichtung (J1) aufweist, das Abstandsmessgerät (30) zur Ausrichtung der Sensoreinheit (60) um die zweite Schwenkachse (S2) eine zweite Justagevorrichtung (J2) aufweist sowie die erste Justagevorrichtung (J1) und die zweite Justagevorrichtung (J2) jeweils eine Einstellschraube (46, 54) umfasst.

2. Abstandsmessgerät nach Anspruch 1, **dadurch gekennzeichnet, dass** die erste Schwenkachse (S1) und die zweite Schwenkachse (S2) senkrecht zueinander angeordnet sind.

3. Abstandsmessgerät nach Anspruch 1 oder 2, **dadurch gekennzeichnet, dass** eine Schwenkbarkeit der Sensoreinheit (60) relativ zu dem Außenträger (40) um die erste Schwenkachse (S1) und um die zweite Schwenkachse (S2) von jeweils mindestens +/- 3° und bevorzugt mindestens +/- 5° möglich ist.

4. Abstandsmessgerät nach einem der vorangegangenen Ansprüche, **dadurch gekennzeichnet**, der Außenträger (40) und der Innenträger (50) jeweils gegenüberliegende Flanken (49, 52) umfassen und die Lagerung um die erste Schwenkachse (S1) Lagerpunkte an den gegenüberliegenden Flanken (49, 52) umfasst.

5. Abstandsmessgerät nach einem der vorangegangenen Ansprüche, **dadurch gekennzeichnet, dass** die Sensoreinheit (60) eingerichtet ist, ein optisches oder akustisches Messsignal auszusenden und einen Messaufnehmer umfasst, um Eigenschaften von dem an einem Gegenstand reflektierten Messsignals aufzunehmen und ein elektronisches Ergebnissignal bereitzustellen, welches ein Maß für den Abstand des Gegenstands von der Sensoreinheit (60) ist.

6. Abstandsmessgerät nach einem der vorangegangenen Ansprüche, **dadurch gekennzeichnet, dass** der Außenträger (40) ein Stahlblech umfasst.

7. Abstandsmessgerät nach einem der vorangegangenen Ansprüche, **dadurch gekennzeichnet, dass** die Sensoreinheit (60) einen in Messrichtung ausgerichteten Signaldurchtrittsbereich (64) aufweist und der Signaldurchtrittsbereich (64) entweder bündig zu der benachbarten Kontur des Außenträgers (40) liegt oder um einen Abstand in Richtung des Inneren des Abstandsmessgeräts (30) versetzt ist.

8. Abstandsmessgerät nach einem der vorangegangenen Ansprüche, **dadurch gekennzeichnet, dass** die Sensoreinheit (60) einen in Messrichtung zeigenden Signaldurchtrittsbereich (64) aufweist, wobei bei einer Ausrichtung des Signaldurchtrittsbereichs (64) vertikal nach oben, das Abstandsmessgerät (30) an seiner Unterseite komplett geöffnet ist oder geöffnete Bereiche umfasst, deren Breite größer ist als Spalten zwischen dem Außenträger (40) und Innenträger (50) beziehungsweise dem Innenträger (50) und der Sensoreinheit (60).

9. Abstandsmessgerät nach einem der vorangegangenen Ansprüche, **dadurch gekennzeichnet, dass** eine erste Fixiervorrichtung (F1) vorgesehen ist, mittels der der Innenträger (50) an dem Außenträger (40) um die erste Schwenkachse (S1) fixierbar ist.

10. Abstandsmessgerät nach Anspruch 9, **dadurch gekennzeichnet, dass** die erste Fixiervorrichtung (F1) von Klemmschrauben (42) gebildet ist, die gleichzeitig die erste Schwenkachse (S1) bilden.

11. Abstandsmessgerät nach einem der vorangegangenen Ansprüche, **dadurch gekennzeichnet, dass** eine zweite Fixiervorrichtung (F2) vorgesehen ist, mittels der die Sensoreinheit (60) an dem Innenträger (50) um die zweite Schwenkachse (S2) fixierbar ist.

12. Abstandsmessgerät nach Anspruch 11, **dadurch gekennzeichnet, dass** die zweite Fixiervorrichtung (F2) von zumindest einer Klemmschraube (56, 59) gebildet ist, von denen eine Klemmschraube (56) gleichzeitig die zweite Schwenkachse (S2) bildet.

13. Industrielles Fahrzeug (10), insbesondere ein Flurförderzeug (10), mit einem am Fahrzeug befestigten Hubgerüst (20,22), wobei ein Lastaufnahmemittel (24) mittels des Hubgerüsts (20, 22) heb- und senkbar ist, und mit einem Abstandsmessgerät (30) gemäß einem der vorangegangenen Ansprüche, das eingerichtet ist, den Abstand zwischen dem Lastaufnahmemittel (24) und einem nicht heb- oder senkbaren Teil (22) des Hubgerüstes oder des Flurförderzeugs (10) zu messen.

## Claims

1. Distance measuring device (30), configured to measure the lifting height of load-lifting equipment (24) of an industrial truck (10), the distance measuring device (30) comprising an outer carrier (40), an inner carrier (50) and a sensor unit (60), the inner carrier (50) being mounted on the outer carrier (40) such that it can be pivoted about a first pivot axis (S1), and the sensor unit (60) being mounted such that it can be pivoted with respect to the inner carrier (50) about a second pivot axis (S2),
**characterized in that**
the distance measuring device (30) has a first adjustment device (J1) for aligning the sensor unit (60) about the first pivot axis (S1), the distance measuring device (30) has a second adjustment device (J2) for aligning the sensor unit (60) about the second pivot axis (S2), and the first adjustment device (J1) and the second adjustment device (J2) each comprise a setting screw (46, 54).

2. Distance measuring device according to Claim 1, **characterized in that** the first pivot axis (S1) and the second pivot axis (S2) are arranged at right angles to each other.

3. Distance measuring device according to Claim 1 or 2, **characterized in that** an ability to pivot the sensor unit (60) relative to the outer carrier (40) about the first pivot axis (S1) and about the second pivot axis (S2) of respectively at least +/-3° and preferably at least +/- 5° is possible.

4. Distance measuring device according to one of the preceding claims, **characterized in that** the outer carrier (40) and the inner carrier (50) each comprise opposite flanks (49, 52), and the mounting about the first pivot axis (S1) comprises bearing points on the opposite flanks (49, 54).

5. Distance measuring device according to one of the preceding claims, **characterized in that** the sensor unit (60) is configured to output an optical or acoustic measured signal and comprises a measuring sensor to record properties of the measured signal reflected at an object and to provide an electronic result signal which is a measure of the distance of the object from the sensor unit (60).

6. Distance measuring device according to one of the preceding claims, **characterized in that** the outer carrier (40) comprises a steel sheet.

7. Distance measuring device according to one of the preceding claims, **characterized in that** the sensor unit (60) has a signal emergence area (64) aligned in the measuring direction, and the signal emergence area (64) is either located flush with the adjacent contour of the outer carrier (40) or is offset by a distance in the direction of the interior of the distance measuring device (30).

8. Distance measuring device according to one of the preceding claims, **characterized in that** the sensor unit (60) has a signal emergence area (64) pointing in the measurement direction, wherein, if the signal emergence area (64) is aligned vertically upwards, the distance measuring device (30) is completely open on its underside or comprises open areas, the width of which is greater than gaps between the outer carrier (40) and inner carrier (50) or the inner carrier (50) and the sensor unit (60).

9. Distance measuring device according to one of the preceding claims, **characterized in that** a first fixing device (F1) is provided, by means of which the inner carrier (50) can be fixed to the outer carrier (40) around the first pivot axis (S1).

10. Distance measuring device according to Claim 9, **characterized in that** the first fixing device (F1) is formed by clamping screws (42), which simultaneously form the first pivot axis (S1).

11. Distance measuring device according to one of the preceding claims, **characterized in that** a second fixing device (F2) is provided, by means of which the sensor unit (60) can be fixed to the inner carrier (50) around the second pivot axis (S2).

12. Distance measuring device according to Claim 11, **characterized in that** the second fixing device (F2) is formed by at least one clamping screw (56, 59), of which one clamping screw (56) simultaneously forms the second pivot axis (S2).

13. Industrial vehicle (10), in particular an industrial truck (10), having a lifting frame (20, 22) fixed to the vehicle, wherein load-lifting equipment (24) can be raised and lowered by means of the lifting frame (20, 22), and having a distance measuring device (30) according to one of the preceding claims, which is configured to measure the distance between the load-lifting equipment (24) and a part (22) of the lifting frame or the industrial truck (10) that cannot be raised or lowered.

## Revendications

1. Appareil de mesure de distance (30), conçu pour mesurer la hauteur de levage d'un moyen de réception de charge (24) d'un chariot de manutention (10), dans lequel l'appareil de mesure de distance (30) comprend un support extérieur (40), un support intérieur (50) et une unité à capteur (60), dans lequel le support intérieur (50) est montée pivotant autour d'un premier axe de pivotement (S1) sur le support extérieur (40) et l'unité à capteur (60) est montée pivotante autour d'un deuxième axe de pivotement (S2) de manière opposée au support intérieur (50),
**caractérisé en ce que** l'appareil de mesure de distance (30) comporte un premier dispositif d'ajustement (J1) destiné à orienter l'unité à capteur (60) autour du premier axe de pivotement (S1), l'appareil de mesure de distance (30) comporte un deuxième dispositif d'ajustement (J2) destiné à orienter l'unité à capteur (60) autour du deuxième axe de pivotement (S2) et le premier dispositif d'ajustement (J1) et le deuxième dispositif d'ajustement (J2) comprennent respectivement une vis de réglage (46, 54).

2. Appareil de mesure de distance selon la revendication 1, **caractérisé en ce que** le premier axe de pivotement (S1) et le deuxième axe de pivotement (S2) sont disposés perpendiculairement l'un à l'autre.

3. Appareil de mesure de distance selon la revendication 1 ou 2, **caractérisé en ce qu'**une aptitude au pivotement de l'unité à capteur (60) est possible par rapport au support extérieur (40) autour du premier axe de pivotement (S1) et autour du deuxième axe de pivotement (S2) respectivement, d'au moins +/-3° et de préférence, d'au moins +/-5°.

4. Appareil de mesure de distance selon l'une quelconque des revendications précédentes, **caractérisé en ce que** le support extérieur (40) et le support intérieur (50) comprennent respectivement des flancs (49, 52) opposés et **en ce que** le montage autour du premier axe de pivotement (S1) comprend des points d'appui sur les flancs opposés (49, 52).

5. Appareil de mesure de distance selon l'une quelconque des revendications précédentes, **caractérisé en ce que** l'unité à capteur (50) est conçue pour émettre un signal de mesure optique ou acoustique et comprend un capteur de mesure destiné à acquérir des propriétés du signal de mesure réfléchi par un objet et pour fournir un signal de résultat électronique qui est une mesure de la distance de l'objet par rapport à l'unité à capteur (60).

6. Appareil de mesure de distance selon l'une quelconque des revendications précédentes, **caractérisé en ce que** le support extérieur (40) comprend une tôle d'acier.

7. Appareil de mesure de distance selon l'une quelconque des revendications précédentes, **caractérisé en ce que** l'unité à capteur (60) comporte une zone de passage de signal (64) orientée dans une direction de mesure et **en ce que** la zone de passage de signal (64) est soit disposée de manière à affleurer au contour voisin du support extérieur (40), soit est décalée d'une certaine distance dans la direction de l'intérieur de l'appareil de mesure de distance (30).

8. Appareil de mesure de distance selon l'une quelconque des revendications précédentes, **caractérisé en ce que** l'unité à capteur (60) comporte une zone de passage de signal (64) pointant dans la direction de mesure, dans lequel lors d'une orientation de la zone de passage de signal (64) verticalement vers le haut, l'appareil de mesure de distance (30) est entièrement ouvert au niveau de sa face inférieure ou comprend une zone ouverte dont la largeur est supérieure à des interstices entre le support extérieur (40) et le support intérieur (50), ou entre le support intérieur (50) et l'unité à capteur (60).

9. Appareil de mesure de distance selon l'une quelconque des revendications précédentes, **caractérisé en ce qu'**il est prévu un premier dispositif de fixation (F1) au moyen duquel le support intérieur (50) peut être fixé au support extérieur (40) autour du premier axe de pivotement (S1).

10. Appareil de mesure de distance selon la revendication 9, **caractérisé en ce que** le premier dispositif de fixation (F1) est formé par des vis de serrage (42) qui forment simultanément le premier axe de pivotement (S1).

11. Appareil de mesure de distance selon l'une quelconque des revendications précédentes, **caractérisé en ce qu'**il est prévu un deuxième dispositif de fixation (F2) au moyen duquel l'unité à capteur (60) peut être fixée au support intérieur (50) autour du deuxième axe de pivotement (S2).

12. Appareil de mesure de distance selon la revendication 11, **caractérisé en ce que** le deuxième dispositif de fixation (F2) est formé par au moins une vis de serrage (56, 59), dont une vis de serrage (56) forme simultanément le deuxième axe de pivotement (S2).

13. Véhicule industriel (10), notamment chariot de manutention (10), comportant un mât de levage (20, 22) fixé au véhicule, dans lequel un moyen de réception de charge (24) peut être levé et abaissé au moyen du mât de levage (20, 22), et comportant un appareil de mesure de distance (30) selon l'une quelconque des revendications précédentes, conçu pour mesurer la distance entre le moyen de réception de charge (24) et une partie ne pouvant pas être levée ou abaissée (22) du mât de levage ou du chariot de manutention (10).
